(19) Europäisches Patentamt / European Patent Office / Office européen des brevets

(11) **EP 4 282 837 A1**

(12) **EUROPEAN PATENT APPLICATION**
published in accordance with Art. 153(4) EPC

(43) Date of publication:
**29.11.2023 Bulletin 2023/48**

(21) Application number: **22848685.8**

(22) Date of filing: **29.07.2022**

(51) International Patent Classification (IPC):
**C03B 32/02** (2006.01) **C03B 23/02** (2006.01)

(52) Cooperative Patent Classification (CPC):
**C03B 23/02; C03B 32/02; C03C 3/097; C03C 10/00;** Y02P 40/57

(86) International application number:
**PCT/CN2022/109031**

(87) International publication number:
**WO 2023/006081 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.07.2021 CN 202110866102**

(71) Applicant: **Chongqing Aureavia Hi-tech Glass Co., Ltd**
**Chongqing 400714 (CN)**

(72) Inventors:
• **HUANG, Hao**
**Chongqing 400714 (CN)**
• **WANG, Yubo**
**Chongqing 400714 (CN)**
• **DENG, Shuang**
**Chongqing 400714 (CN)**
• **TAN, Baoquan**
**Chongqing 400714 (CN)**
• **HU, Wei**
**Chongqing 400714 (CN)**

(74) Representative: **Comoglio, Elena et al**
**Jacobacci & Partners S.p.A.**
**Corso Emilia 8**
**10152 Torino (IT)**

(54) **MICROCRYSTALLINE GLASS, MANUFACTURING METHOD THEREFOR AND USE THEREOF**

(57) The present disclosure provides a method for manufacturing a microcrystalline glass, the microcrystalline glass manufactured according to the method, and a use thereof. The method comprises: (1) nucleation of a raw glass sheet, followed by primary crystallization, where: the primary crystallization temperature is $x_1$, the primary crystallization time is t, and the primary crystallization temperature $x_1$ and the primary crystallization time t satisfy the following conditions: first, $-a \times t +652 \leq x_1 \leq -a \times t+667$, where a is a constant, $0.1 \leq a \leq 0.25$, and t is 10 to 300min; and second, $y_1=0.0029x_1+b$, where $y_1$ is the glass density after primary crystallization, and $2.440 g/cm^3 \leq y_1 \leq 2.490 g/cm^3$, b is a constant, and $0.55<b<0.60$; and (2) secondary crystallization of the glass sheet which has been subject to primary crystallization. The present disclosure controls the temperature and time of the primary crystallization of the raw glass sheet that needs to be subject to secondary crystallization, thereby reducing the degree of deformation caused by secondary crystallization. Moreover, the manufactured microcrystalline glass has good light transmittance and improved product yield.

FIG. 1

EP 4 282 837 A1

## Description

### Technical Field

The present disclosure belongs to the field of glass manufacturing, and in particular relates to a microcrystalline glass, a manufacturing method therefor and a use thereof.

### Background Art

As the information age approaches, the portability and ease of operation of smart devices become particularly important, thereby making mobile phones the most promising smart terminal device today. More and more new materials are used in the design and production for smartphones, and the cover glass always participates therein. The cover glass of mobile phone, which enters a new 3D era through the 2.5D era from 2D, not only makes the appearance of mobile phones more exquisite, but also greatly enhances the sense of touch experience for the user groups of mobile phone.

Glass becomes the best choice for screen cover because of its excellent mechanical properties and excellent light transmission performance. However, people are no longer satisfied with the traditional cover made of glass, and thus the microcrystalline glass emerges as the new development direction of cover glass. New materials bring not only new experiences, but also new challenges.

For cover glass with specific shapes (such as with curved edges), secondary heating crystallization is often required, and during the molding process of secondary crystallization, microcrystalline glass is prone to irregular deformation, resulting in lower yields and material waste.

How to control the deformation quantity of microcrystalline glass manufactured by the secondary crystallization technology is a pressing technical problem to be solved in this field.

### Summary

With regard to the deficiencies of the prior art, the first objective of the present disclosure is to provide a method for manufacturing microcrystalline glass, wherein the method comprises the steps of:

(1) performing nucleation on a raw glass sheet, followed by primary crystallization, wherein a primary crystallization temperature is $x_1$, and a primary crystallization duration is t; and
the primary crystallization temperature $x_1$ and the primary crystallization duration t can meet the following conditions:

$$① \quad -a \times t + 652 \leq x_1 \leq -a \times t + 667,$$

where a is a constant, and $0.1 \leq a \leq 0.25$; t is 10-300min; and the unit of crystallization temperature $x_1$ is °C; and

$$② \quad y_1 = 0.0029 x_1 + b,$$

where $y_1$ is the glass density after primary crystallization, and $2.440 g/cm^3 \leq y_1 \leq 2.490 g/cm^3$,

b is a constant, and $0.55 < b < 0.60$; and

(2) performing secondary crystallization on the raw glass sheet which has been subjected to primary crystallization.

The present disclosure controls the temperature and duration of the primary crystallization for the raw glass sheet that needs to be subjected to secondary crystallization, so as to obtain the desired types of crystal phase and crystal growth rate. Therefore, the density $y_1$ after primary crystallization meets $2.440 g/cm^3 \leq y_1 \leq 2.490 g/cm^3$, which closes to the density after secondary crystallization, such that the deformation rate caused by secondary crystallization is reduced and product yield is improved.

The presumed principle is that when the glass reaches the corresponding density after primary crystallization, the crystal growth inside the glass goes into a hysteresis phase with a relatively slow rate, which has a macroscopic manifestation that the glass does not expand significantly. If the density after primary crystallization is less than $2.440 g/cm^3$, the various crystalline phases in the glass have not been fully grown and transformed, and then after secondary crystallization, it will lead to an excessive deformation rate of the microcrystalline glass. If the density after primary crystallization is greater than $2.490 g/cm^3$, the crystalline phases in the glass have grown and transformed completely, and then after the secondary crystallization, it will lead to excessive growth of the crystalline phases. In this case, the deformation rate of the glass will be reduced, but the optical properties such as transmittance of the glass will be deteriorated.

It is understood that the raw glass sheets can be obtained from raw glass materials after melting, molding, and cold processing, wherein the specific preparation process typically, but not limiting, comprises weighing and mixing of the glass raw materials; melting and forming of the glass, wherein forming methods comprise but are not limited to float glass process, overflow, recycle flattening, and pouring, etc.; and annealing of the formed glass slabs and then performing cold processing to obtain the raw glass sheets of the same size.

As a preferred technical solution, the primary crystallization duration t is of 10-300min (e.g. 25min, 40min, 55min, 70min, 95min, 110min, 135min, 155min, 195min, 210min, 240min, 270min, or 290min, etc.), preferably 50-200min, preferably 80-150min, and preferably 90-120min; the density of the glass after the primary crystallization meets $2.447g/cm^3 \leq y_1 \leq 2.455g/cm^3$, preferably $2.455g/cm^3 \leq y_1 \leq 2.460g/cm^3$, preferably $2.460g/cm^3 \leq y_1 \leq 2.481g/cm^3$, and preferably $2.481 \ g/cm^3 \leq y_1 \leq 2.490g/cm^3$.

The glass density after primary crystallization meets $2.440g/cm^3 \leq y_1 \leq 2.455g/cm^3$ to further achieve the effect of controlling the deformation rate of glass after secondary crystallization at 1.2%-1.8%; the glass density after primary crystallization meets $2.455g/cm^3 \leq y_1 \leq 2.460g/cm^3$ to further achieve the effect of controlling the deformation rate of glass after secondary crystallization at 1.0%-1.2%; the glass density after primary crystallization meets $2.460g/cm^3 \leq y_1 \leq 2.481 \ g/cm^3$ to further achieve the effect of controlling the deformation rate of glass after secondary crystallization at 0%-1.0%; and the glass density after primary crystallization meets $2.481g/cm^3 \leq y_1 \leq 2.490g/cm^3$ to further achieve the effect of controlling the deformation rate of glass after secondary crystallization at 0.0%-0.5%.

As a preferred technical solution, the nucleation temperature is of 520-580°C (e.g., 525°C, 530°C, 535°C, 540°C, 545°C, 550°C, 560°C, 565°C, 570°C, or 575 °C, etc.), preferably 545-575 °C, preferably 550-570 °C; preferably, the nucleation duration is of 180-360min (e.g., 190min, 195min, 205min, 225min, 240min, 245min, 260min, 280min, 300min, 310min, 320min, or 330min, etc.), preferably 200-280min, preferably 220-250min.

A suitable nucleation temperature can achieve an effect of uniform nucleation.

As a preferred technical solution, the process of secondary crystallization comprises, in sequence, a heating stage, a thermoforming stage, and a cooling stage.

The process of the secondary crystallization is staged to control the temperature of each stage precisely, thereby reducing or even eliminating the impact on material properties due to the instability of processing equipment and further improving the consistency of the finished product to enhance production yield.

As a preferred technical solution, the heating stage is to raise the temperature from room temperature at a rate of 10-60°C/s to a first target temperature; preferably the heating rate is of 20-50°C/s, preferably 30-40°C/s; and the first target temperature is of 650-750°C, and preferably the first target temperature is of 670-730°C, preferably 680-710°C.

As a preferred technical solution, the thermoforming stage is to raise the temperature from the first target temperature to a second target temperature; and the heating rate is 15-50°C/min, preferably 20-40°C/min, and preferably 30-40°C/min.

The second target temperature is of 680-800 °C, preferably 700-780 °C, preferably 720-750°C, and preferably 730-740°C.

As a preferred technical solution, the cooling stage is to cool down from the second target temperature to room temperature at a rate of 30-50 °C /s, preferably at a cooling rate of 35-45°C/s, and preferably 38-40°C/s.

A suitable temperature change curve can reduce the impact of processing equipment on the glass, on the one hand, to prevent the glass from breaking due to sudden cold and sudden heat, and on the other hand, to prevent the increased working hours and low production efficiency due to a too slow heating or cooling rate. In addition, by controlling the temperature change curve, the optical properties of the glass can also be improved.

As a preferred technical solution, the raw glass sheet is lithium-aluminum-silicon glass.

Preferably, the raw glass sheet contains, in mol%, the following components:

| | |
|---|---|
| $Al_2O_3$ | 3-7 |
| $ZrO_2$ | 0.5~5 |
| $Li_2O$ | 10-25 |
| $Na_2O$ | 0.5~5 |
| $P_2O_5$ | 0.5~2 |
| $B_2O_3$ | 0.1~2 |
| $SiO_2$ | 65-72. |

As a preferred technical solution, the $Al_2O_3$ content in the raw glass sheet is of 4-6mol%, preferably 4.5-5.5mol%.

As a preferred technical solution, the $ZrO_2$ content in the raw glass sheet is of 1-4mol%, preferably 2.5-3.5mol%.

As a preferred technical solution, the $Li_2O$ content in the raw glass sheet is of 14-20mol%, preferably 16-19mol%, and preferably 17-18mol%.

As a preferred technical solution, the $Na_2O$ content in the raw glass sheet is of 0.7-3.2mol%, preferably 1.0-2.5mol%.

As a preferred technical solution, the $P_2O_5$ content in the raw glass sheet is of 0.8-1.5mol%, preferably 1-1.3mol%.

As a preferred technical solution, the $B_2O_3$ content in the raw glass sheet is of 0.5-1.5mol%, preferably 0.8-1.2mol%.

As a preferred technical solution, the $SiO_2$ content in the raw glass sheet is of 67-71mol%, preferably 68-70mol%.

The second objective of the present disclosure is to provide a microcrystalline glass obtained by a method as described in the first objective.

The third objective of the present disclosure is to provide a use of microcrystalline glass manufactured by the method as described in the second objective, wherein the microcrystalline glass is used as any one of a mobile phone cover, a watch cover, a tablet computer cover, or an automobile display cover.

Compared with the prior art, the present disclosure has at least the following beneficial effects.

The present disclosure controls the temperature and duration of the primary crystallization of the raw glass sheet that needs to be subjected to the secondary crystallization, such that the density $y_1$ after primary crystallization meets $2.440g/cm^3 \leq y_1 \leq 2.490g/cm^3$, which closes to the density after secondary crystallization, and thus the deformation degree during secondary crystallization is reduced. Moreover, the manufactured glass has a good transmittance, thereby improving product yield.

**Brief Description of Drawings**

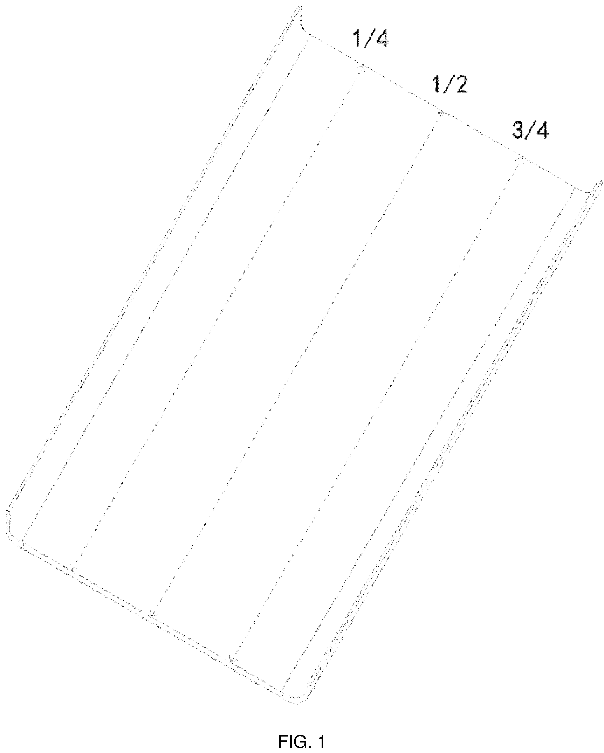

FIG. 1 is a schematic view of the measured position when measuring the change in glass size after secondary crystallization.

**Detailed Description of Embodiments**

The technical solutions of the present disclosure are further described below by means of specific embodiments.

It should be apparent to those skilled in the art that the embodiments are merely helpful in understanding the present disclosure and should not be considered as a specific limitation to the present disclosure.

**Example 1**

A microcrystalline glass was manufactured by the following method.

(1) The raw glass materials were weighed and mixed according to the following glass formula to obtain the raw-material mixture; and

the raw materials, in mol%, contained the following components:

| | |
|---|---|
| $Al_2O_3$ | 5 |
| $ZrO_2$ | 2.7 |
| $Li_2O$ | 14.9 |
| $Na_2O$ | 2.1 |
| $P_2O_5$ | 1.6 |
| $B_2O_3$ | 0.75 |
| $SiO_2$ | balance. |

(2) The raw-material mixture was molded and cooled to obtain the raw glass sheet, wherein the molding method was to melt at 1650°C for 5h and then cast in the mold preheated to 200°C, and the cooling method was to anneal at 580°C for 24h and then reduce to room temperature with the annealing furnace; and the size of the glass sheet is 159x74x0.60mm.

(3) The raw glass sheet was subjected to nucleation, wherein the nucleation temperature was 555°C and the nucleation duration was 280min; then the primary crystallization was performed, wherein the primary crystallization temperature is 645°C and the primary crystallization duration is 100min.

(4) The raw glass sheet after the primary crystallization was subjected to the secondary crystallization, to obtain the microcrystalline glass; and the secondary crystallization process was carried out according to the following temperature changing procedure: rising from room temperature at a rate of 20°C /s to 700°C, rising from 700°C to 800°C at a rate of 25°C/s, and falling from 800°C to room temperature at a rate of 20°C/s.

**Example 2**

The difference from Example 1 was that the primary crystallization temperature of step (3) was 640°C and the primary crystallization duration was 100min.

**Example 3**

The difference from Example 1 was that the primary crystallization temperature of step (3) was 635°C and the primary crystallization duration was 100min.

**Example 4**

The difference from Example 1 was that the primary crystallization temperature of step (3) was 650°C and the primary crystallization duration was 100min.

**Example 5**

The difference from Example 1 was that the primary crystallization temperature of step (3) was 637°C and the primary crystallization duration was 90min.

**Example 6**

The difference from Example 1 was that the primary crystallization temperature of step (3) was 642°C and the primary crystallization duration was 90min.

**Example 7**

The difference from Example 1 was that the primary crystallization temperature of step (3) was 647°C and the primary crystallization duration was 90min.

**Example 8**

The difference from Example 1 was that the primary crystallization temperature of step (3) was 652°C and the primary crystallization duration was 90min.

**Example 9**

The difference from Example 1 was that the primary crystallization temperature of step (3) was 635°C and the primary crystallization duration was 120min.

**Example 10**

The difference from Example 1 was that the primary crystallization temperature of step (3) was 640°C and the primary crystallization duration was 120min.

**Example 11**

The difference from Example 1 was that the primary crystallization temperature of step (3) was 655°C and the primary crystallization duration was 100min.

**Example 12**

The difference from Example 1 was that the primary crystallization temperature of step (3) was 636°C and the primary crystallization duration was 300min.

### Example 13

The difference from Example 1 was that the primary crystallization temperature of step (3) was 650°C and the primary crystallization duration was 10min.

### Example 14

The difference from Example 1 was that the glass formulation of step (1) was as follows, wherein the raw materials, in mol%, contained the following components:

| | |
|---|---|
| $Al_2O_3$ | 7.0 |
| $ZrO_2$ | 0.5 |
| $Li_2O$ | 25.0 |
| $Na_2O$ | 0.5 |
| $P_2O_5$ | 2.0 |
| $B_2O_3$ | 2.0 |
| $SiO_2$ | balance. |

### Example 15

The difference from Example 1 was that the glass formulation of step (1) was as follows, wherein the raw materials, in mol%, contained the following components:

| | |
|---|---|
| $Al_2O_3$ | 3.0 |
| $ZrO_2$ | 5.0 |
| $Li_2O$ | 10 |
| $Na_2O$ | 5.0 |
| $P_2O_5$ | 0.5 |
| $B_2O_3$ | 0.1 |
| $SiO_2$ | balance. |

### Example 16

The difference from Example 1 was that the nucleation temperature of step (3) was 520°C and the nucleation duration was 360min; and
in step (4), the temperature was increased from room temperature to 650°C at a rate of 10°C/s, increased from 650°C to 680°C at a rate of 15°C/s, and decreased from 680°C to room temperature at a rate of 10°C/s.

### Example 17

The difference from Example 1 was that the nucleation temperature of step (3) was 580°C and the nucleation duration was 180min; and
in step (4), the temperature was increased from room temperature to 750°C at a rate of 60°C/s, increased from 750°C to 850°C at a rate of 50°C/s, and decreased from 680 °C to room temperature at a rate of 50°C/s.

### Comparative Example 1

The difference from Example 1 was that the primary crystallization temperature of step (3) was 630°C and the primary crystallization duration was 150min.

### Comparative Example 2

The difference from Example 1 was that the primary crystallization temperature of step (3) was 675°C and the primary crystallization duration was 100min.

**Comparative Example 3**

The difference from Example 1 was that the primary crystallization temperature of step (3) was 635°C and the primary crystallization duration was 50min.

Performance Test

(1) Density measurement: the measurement method was as follows: the glass sheet to be measured was soaked in a mixed solution including ethanol and pure water at a ratio of 1: 1 for 30min, and then placed in the ultrasonic cleaning machine (XDQ 5090ST, Dongguan Xingdaqiang Ultrasonic Equipment Co., Ltd.) for 10min; a dust-free cloth was used to wipe up the surface liquid; and a densitometer (ELECTRONIC DEN DENSIMEETER SD-200L, Japan) was used to measure the density, so as to measure the density after primary crystallization and the density after secondary crystallization.

(2) Dimensional change: the test method was as follows: the two-dimensional size of the glass after the secondary crystallization process was measured by using a two-dimensional measuring instrument (MY-YXCL-4030 ($\pm 0.01$mm)). The test method was as follows: three sets of data were measured at positions of 1/4, 1/2, and 3/4 of the long side (FIG. 1 shows a schematic view of the measured positions in the measurement method), wherein 30 data were obtained from ten tested sheets. The maximum value ($L_{max}$, mm) and the minimum value ($L_{min}$, mm) among the 30 data were selected to calculate the difference between the maximum value and the minimum value, which was recorded as dimensional change $y_2$ (mm). The deformation rate was then calculated, which was equal

to $\dfrac{y_2}{\dfrac{(L_{max}+L_{min})}{2}} \times 100\%$, where the deformation rate represented the concentration degree of the dimensional change of the batch of glass after the secondary crystallization. The larger deformation rate represented the larger dimensional change, and the smaller deformation rate represented the smaller dimensional change.

(3) Light transmittance: the test method was as follows. The glass sheet after crystallization was cleaned in the ultrasonic cleaning machine, wherein the cleaning condition comprised a cleaning duration of 5-10min, the used cleaning agent being the common detergent diluted by 10 times, a cleaning temperature of 45°C -65°C, and a cleaning frequency of 20KHZ-40KHZ. The haze meter was used to test the transmittance of microcrystalline glass at different wavelengths according to the standard "GB/T 7962.12-2010 Colorless Optical Glass Test Method Part 12: Inter-spectral Transmission Ratio", and the haze meter used in the present disclosure was spectrocolorimeter CM-3600A, Konica Minolta, Japan.

The relevant parameters and test results of primary crystallization are shown in Table 1.

Table 1. Relevant parameters and test results of primary crystallization

| | Example 1 | Example 2 | Example 3 | Example 4 | Example 5 | Example 6 | Example 7 | Example 8 | Example 9 | Example 10 |
|---|---|---|---|---|---|---|---|---|---|---|
| primary crystallization temperature /°C | 645 | 640 | 635 | 650 | 637 | 642 | 647 | 652 | 635 | 640 |
| primary crystallization duration /min | 100 | 100 | 100 | 100 | 90 | 90 | 90 | 90 | 120 | 120 |
| density after primary crystallization /g/cm$^3$ | 2.461 | 2.452 | 2.440 | 2.483 | 2.442 | 2.458 | 2.462 | 2.484 | 2.441 | 2.460 |
| whether the condition① is met | Yes | Yes | Yes | Yes | Yes | Yes | Yes | Yes | Yes | Yes |
| whether the condition② is met | Yes | Yes | Yes | Yes | Yes | Yes | Yes | Yes | Yes | Yes |
| dimensional change $y_2$ /mm | 0.109 | 0.161 | 0.238 | 0.054 | 0.231 | 0.149 | 0.105 | 0.046 | 0.234 | 0.111 |
| deformation rate /% | 0.98 | 1.22 | 1.48 | 0.40 | 1.45 | 1.09 | 0.67 | 0.38 | 1.47 | 1.01 |
| light transmittance/% | 90.15 | 89.70 | 89.34 | 90.61 | 89.47 | 89.73 | 90.19 | 90.72 | 89.41 | 90.13 |
| | Example 11 | Example 12 | Example 13 | Example 14 | Example 15 | Example 16 | Example 17 | Comparative Example 1 | Comparative Example 2 | Comparative Example 3 |
| primary crystallization temperature /% | 655 | 636 | 650 | 645 | 645 | 645 | 645 | 630 | 675 | 635 |
| primary crystallization duration /min | 100 | 300 | 10 | 100 | 100 | 100 | 100 | 100 | 100 | 50 |
| density after primary crystallization /g/cm$^3$ | 2.486 | 2.442 | 2.449 | 2.461 | 2.462 | 2.461 | 2.461 | 2.418 | 2.495 | 2.438 |
| whether the condition ① is met | Yes | Yes | Yes | Yes | Yes | Yes | Yes | Yes | No | No |
| whether the condition ② is met | Yes | Yes | Yes | Yes | Yes | Yes | Yes | No | No | No |
| dimensional change /mm | 0.036 | 0.230 | 0.195 | 0.111 | 0.107 | 0.109 | 0.109 | 0.358 | 0.053 | 0.242 |
| deformation rate /% | 0.34 | 1.44 | 1.24 | 0.99 | 0.97 | 0.98 | 0.98 | 1.88 | 0.39 | 1.53 |

(continued)

|  | Example 11 | Example 12 | Example 13 | Example 14 | Example 15 | Example 16 | Example 17 | Comparative Example 1 | Comparative Example 2 | Comparative Example 3 |
|---|---|---|---|---|---|---|---|---|---|---|
| light transmittance/% | 90.74 | 89.45 | 89.69 | 90.13 | 90.18 | 89.95 | 90.19 | 86.11 | 87.85 | 86.21 |

According to Table 1, it can be seen that

both the temperature $X_1$ and the duration t of the primary crystallization implemented in Examples 1-17 meet

condition ①: $-a \times t + 652 \leq x_1 \leq -a \times t + 667$, where a is a constant, and $0.1 \leq a \leq 0.25$; and t is 10-300min, and the crystallization temperature $x_1$ is in °C; and

condition ②: $y_1 = 0.0029x_1 + b$, where $y_1$ is the glass density after primary crystallization, and $2.440g/cm^3 \leq y_1 \leq 2.490g/cm^3$; and b is a constant, and $0.55 < b < 0.60$. The deformation rate of the produced microcrystalline glass is less than 1.5%, and the light transmittance is higher than 89%, wherein within the limited range of density of the glass after primary crystallization, the deformation rate of the glass after secondary crystallization gradually decreases as the density increases, and the light transmittance also increases correspondingly.

In the Comparative Example 1, the temperature and duration of primary crystallization meet the condition ①, but the temperature and density after primary crystallization do not meet the condition ②. It can be seen that, after secondary crystallization, the deformation rate of the glass increases to 1.58% and the light transmittance is poorer.

In the Comparative Example 2, the temperature and duration of primary crystallization do not meet conditions ① and ②, where the density after primary crystallization exceeds $2.490g/cm^3$. It can be seen that the light transmittance is deteriorated, although a relatively small deformation rate can be obtained.

In the Comparative Example 3, the temperature and duration of primary crystallization do not satisfy conditions ① and ②. It can be seen that after the secondary crystallization, the deformation rate of the glass increases to 1.53% and the light transmittance is poorer.

The above-described embodiments are only a part of the embodiments of the present disclosure, and not all of them. The detailed description of embodiments of the present disclosure is not intended to limit the scope of the present disclosure for which protection is claimed, but merely denote selected embodiments of the present disclosure. Based on the embodiments of the present disclosure, all other embodiments obtained by those skilled in the art without creative effort shall fall within the protection scope of the present disclosure.

## Claims

1. A method for manufacturing a microcrystalline glass, **characterized in that** the method comprises steps of

(1) performing nucleation on a raw glass sheet, followed by primary crystallization, wherein a primary crystallization temperature is $x_1$, and a primary crystallization duration is t, wherein

the primary crystallization temperature $x_1$ and the primary crystallization duration t satisfy following conditions:①

$$① \; -a \times t + 652 \leq x_1 \leq -a \times t + 667,$$

where a is a constant, and $0.1 \leq a \leq 0.25$; and t is 10-300min, and the crystallization temperature $x_1$ has a unit of °C; and

$$② \; y_1 = 0.0029x_1 + b,$$

where $y_1$ is a glass density after the primary crystallization, and $2.440g/cm^3 \leq y_1 \leq 2.490g/cm^3$; and b is a constant, and $0.55 < b < 0.60$; and

(2) performing secondary crystallization on the raw glass sheet after the primary crystallization.

2. The method according to claim 1, wherein the glass density after the primary crystallization meets $2.447g/cm^3 \leq y_1 \leq 2.490g/cm^3$, preferably $2.455g/cm^3 \leq y_1 \leq 2.490g/cm^3$, preferably $2.460g/cm^3 \leq y_1 \leq 2.490g/cm^3$, and preferably $2.481 g/cm^3 \leq y_1 \leq 2.490g/cm^3$.

3. The method according to claim 1, wherein a nucleation temperature is of 520-580°C, preferably 545-575°C, and preferably 550-570°C; and a nucleation duration is of 180-360min, preferably 200-280min, and preferably 220-250min.

4. The method according to any one of claims 1 to 3, wherein a process of the secondary crystallization comprises, in sequence, a heating stage, a thermoforming stage, and a cooling stage.

5. The method according to claim 4, wherein the heating stage is to raise a temperature from room temperature at a rate of 10-60°C/s to a first target temperature, wherein
the first target temperature is of 650-750°C.

6. The method according to claim 5, wherein a heating rate of the heating stage is of 20-50°C/s, preferably 30-40°C/s.

7. The method according to claim 4, wherein the thermoforming stage is to raise a temperature from the first target temperature to a second target temperature, wherein a heating rate is 15-50°C/min and the second target temperature is of 680-850°C.

8. The method according to claim 4, wherein the cooling stage is to cool down from the second target temperature to the room temperature at a rate of 10-50°C/s.

9. The method according to any one of claims 1 to 8, wherein the raw glass sheet is lithium-aluminum-silicon glass, preferably, the raw glass sheet contains, in mol%, following components:

| | |
|---|---|
| $Al_2O_3$ | 3-7 |
| $ZrO_2$ | 0.5~5 |
| $Li_2O$ | 10~25 |
| $Na_2O$ | 0.5~5 |
| $P_2O_5$ | 0.5~2 |
| $B_2O_3$ | 0.1~2 |
| $SiO_2$ | 65-72. |

10. A microcrystalline glass, **characterized in that** the microcrystalline glass is manufactured by the method according to any one of claims 1 to 9.

11. Use of a microcrystalline glass manufactured by the method according to any one of claims 1 to 9, **characterized in that** the microcrystalline glass is used as any one of a cell phone cover, a watch cover, a tablet computer cover, and an automobile display cover.

EP 4 282 837 A1

FIG. 1

12

## INTERNATIONAL SEARCH REPORT

| | International application No. |
|---|---|
| | **PCT/CN2022/109031** |

**A. CLASSIFICATION OF SUBJECT MATTER**

C03B 32/02(2006.01)i; C03B 23/02(2006.01)i

According to International Patent Classification (IPC) or to both national classification and IPC

**B. FIELDS SEARCHED**

Minimum documentation searched (classification system followed by classification symbols)

C03B

Documentation searched other than minimum documentation to the extent that such documents are included in the fields searched

Electronic data base consulted during the international search (name of data base and, where practicable, search terms used)

CNTXT; CNABS; DWPI; VEN; ENTXT; CNKI; ELSEVIER: 微晶玻璃, 玻璃陶瓷, 二硅酸锂, 硅酸锂, 锂铝硅酸盐, 核化, 晶化, 密度, 透光率, 变形, microcrystalline glass, glass ceramic, lithium disilicate, lithium silicate, lithium aluminosilicate, nucleation, crystallization, density, light transmittance, deformation

**C. DOCUMENTS CONSIDERED TO BE RELEVANT**

| Category* | Citation of document, with indication, where appropriate, of the relevant passages | Relevant to claim No. |
|---|---|---|
| X | CN 111253087 A (CHONGQING CITY LIANGJIANG NEW DISTRICT XIAMEIXI SCIENCE AND TECHNOLOGY PARTNERSHIP ENTERPRISE (LIMITED PARTNERSHIP)) 09 June 2020 (2020-06-09) description, paragraphs 47-59 and 91-127 | 1-11 |
| A | CN 110372216 A (SHENZHEN DONGLIHUA TECHNOLOGY CO., LTD.) 25 October 2019 (2019-10-25) entire document | 1-11 |
| A | CN 111348834 A (KORNERSTONE MATERIALS TECHNOLOGY CO., LTD.) 30 June 2020 (2020-06-30) entire document | 1-11 |
| A | JP H06329440 A (OHARA K. K.) 29 November 1994 (1994-11-29) entire document | 1-11 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 September 2022** | **24 October 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/109031**

| Patent document cited in search report | | | Publication date (day/month/year) | Patent family member(s) | | | Publication date (day/month/year) |
|---|---|---|---|---|---|---|---|
| CN | 111253087 | A | 09 June 2020 | WO | 2021197145 | A1 | 07 October 2021 |
| CN | 110372216 | A | 25 October 2019 | None | | | |
| CN | 111348834 | A | 30 June 2020 | None | | | |
| JP | H06329440 | A | 29 November 1994 | DE | 69422831 | D1 | 02 March 2000 |
| | | | | CN | 1114954 | A | 17 January 1996 |
| | | | | DE | 69409424 | D1 | 14 May 1998 |
| | | | | EP | 0626353 | A1 | 30 November 1994 |

Form PCT/ISA/210 (patent family annex) (January 2015)